# EUROPÄISCHE PATENTSCHRIFT

(11) **EP 1 241 420 B1**
(45) Veröffentlichungstag und Bekanntmachung des Hinweises auf die Patenterteilung: **27.08.2008**
(21) Anmeldenummer: 02405196.3
(22) Anmeldetag: 14.03.2002
(51) Int. Cl.: F25D 31/00, F16K 15/18

(54) **Ventilanordnung für ein selbstkühlendes Getränkefass**
Valve arrangement for self-cooling beverage containers
Arrangement de soupape pour un recipient de boissons auto-refroidissant

(30) Priorität: 17.03.2001 CH 4952001
(43) Veröffentlichungstag der Anmeldung: 18.09.2002
(73) Patentinhaber: Müller AG, 4142 Münchenstein (CH)
(72) Erfinder: Fischer-Stocker, Marco, 4146 Hochwald (CH); Keller, Max, 79604 Rheinfelden (DE)
(74) Vertreter: Alder, Hans Rudi

(56) Entgegenhaltungen:
- EP-A- 1 054 222
- WO-A-01/10738
- US-A- 5 090 599

## Beschreibung

Die vorliegende Erfindung betrifft eine Ventilanordnung für ein selbstkühlendes Getränkefass gemäss Oberbegriff des Anspruchs 1.

Derartige Ventile finden ihre Verwendung bei selbstkühlenden Bierfässern wie sie beispielsweise in der EP 1'054'222 beschrieben sind. Diese Fässer beinhalten mehrere Kammern; eine Blase zur Aufnahme des Getränkes, einen diese Blase umschliessenden Verdampferraum und einen diese beiden Kammern umschliessenden Adsorberraum. Bei diesen Fässern ist ein als Verdampfer wirkender Belag in gutem thermischen Kontakt zum Getränk aussen auf der Behälterblase angebracht. Eine Zwischenwand, im folgenden auch als Verdampfermantel bezeichnet, trennt den Verdampferraum vom Adsorberraum, welcher in der Regel von der Aussenwand und dem Verdampfermantel begrenzt wird. Dieser Verdampfermantel weist eine mit einem Ventil verschliessbare Öffnung auf, welche den Verdampferraum mit dem Adsorberraum verbindet. In diesem Adsorberraum ist ein Sorptionsmittel eingebracht, insbesondere aus einem Zeolithgranulat. Dazu ist der Adsorberraum nochmals durch ein Lochblech unterteilt. Im Verdampferraum und insbesondere im als Verdampfer wirkenden Belag ist eine vorgegebene Menge Wasser deponiert. Um das Getränk kühlen zu können, wird der Adsorberraum vorgängig mit Hilfe eines Wärmeprozesses evakuiert und getrocknet. Das im Adsorberraum enthaltene Zeolithgranulat wird wieder auf Umgebungstemperatur gebracht, bevor das Getränk in die Blase eingefüllt wird. Wird nun vor dem Abzapfen die Überströmöffnung von dem Ventil freigegeben und damit der evakuierte Adsorberraum mit dem Verdampferraum in Verbindung gebracht, strömt Wasserdampf aus dem Verdampferraum in den Adsorberraum. Die für den Verdampfungsprozess benötigte Wärme wird dabei dem Getränk entzogen, womit sich das Getränk abkühlt. Dieser Teilprozess läuft so lange, bis das kristalline Zeolith mit Wasser gesättigt ist oder das Überströmen von verdampftem Wasser aus dem Verdampferraum in den Adsorberraum unterbrochen wird.

Um das Überströmen von Wasserdampf aus dem Verdampfer in den Zeolith-Sorber auszulösen resp. zu verhindern, ist ein von aussen betätigbares Ventil auf dem Verdampfermantel vorgesehen.

Dieses Ventil ist für das einwandfreie Funktionieren des selbstkühlenden Getränkefasses von wesentlicher Bedeutung. Dichtet dieses Ventil den Verdampferraum nicht vollständig gegen den Adsorberraum ab, strömt Wasserdampf kontinuier-lich aus der Verdampferkammer in den Adsorberraum und führt zu einer Sättigung des Zeolithgranulats, bevor das Getränk gewollt herabgekühlt werden soll. Derartige Leckagen des Ventils können durch Deformationen am Verdampfermantel oder am Oberboden des Fasses erzeugt werden. Bei der mehrfachen Verwendung dieser selbstkühlenden Getränkefässer können auch kleine Zeolith-Partikel entstehen, welche sich an der Dichtlippe des Ventils festsetzen können und damit zu Undichtigkeiten führen.

Es ist deshalb Aufgabe der vorliegenden Erfindung einen mehrwandigen Behälter, insbesondere ein selbstkühlendes Getränkefass mit einer Ventilanordnung, und insbesondere mit einer Ventilverschlussanordnung, zu schaffen, welches auch bei mehrfacher Verwendung, bei druckbedingten Deformationen des Verdampfermantels und/oder bei allfälligen, durch unsachgemässen Gebrauch verursachte Deformationen am Aussenmantel respektive am Oberboden des Fasses, immer noch sicher abdichtet.

Diese Aufgabe wird erfindungsgemäss durch einselbstkühlendes Getränkefass mit den Merkmalen des Anspruchs 1 gelöst und insbesondere durch eine Ventilverschlussanordnung mit den Merkmalen des Anspruchs 6. Das erfindungsgemässe selbstkühlende Getränkefass zeichnet sich durch eine Ventilverschlussanordnung aus, welche eine Ventilträgerplatte umfasst, die mit einer Zwischenwand des selbstkühlenden Getränkefasses druckdicht verbunden ist. Die Ventilverschlussanordnung umfasst ein Dichtungselement, welches mit der Ventilträgerplatte druckdicht verbunden ist, sowie eine Ventilverschlussklappe, welche über eine Ventilverschlussfeder mit der Ventilträgerplatte verbunden ist.

Bevorzugte Weiterbildungen dieses selbstkühlenden Getränkefasses sowie dieser Ventilverschlussanordnung weisen die Merkmale der jeweiligen Unteransprüche auf.

Die vorliegende Erfindung soll anhand eines Ausführungsbeispiels und mit Hilfe der Figuren näher erläutert werden. Dabei zeigt:
- Fig. 1: ein perspektivisches Schnittbild eines selbstkühlenden Getränkefasses gemäss Stand der Technik;
- Fig. 2: ein perspektivisches Schnittbild eines erfindungsgemässen Getränkefasses;
- Fig. 3: ein Schnittbild durch eine erfindungsgemässe Ventilanordnung.

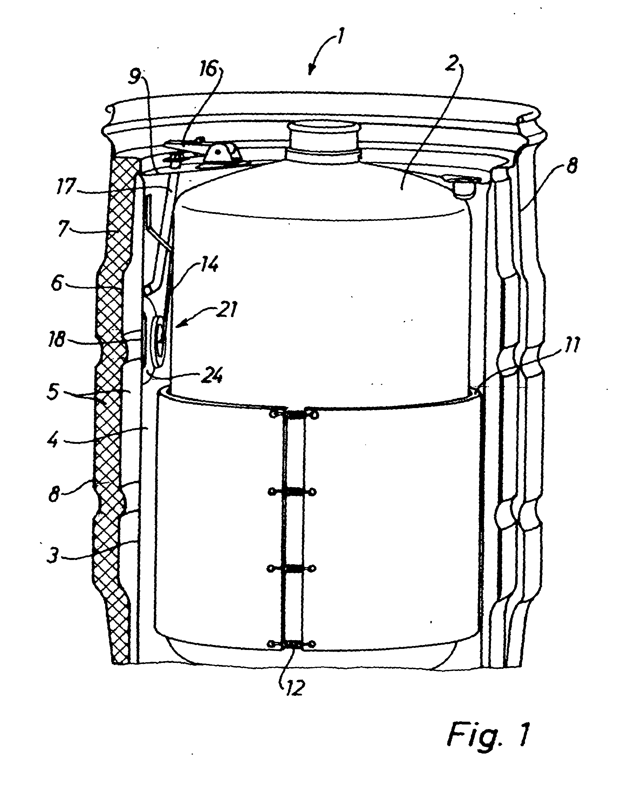

Das in Fig. 1 dargestellte Schnittbild zeigt ein selbstkühlendes Getränkefass 1. Dieses weist mehrere Zwischenwände auf und umfasst eine Blase 2 für die Aufnahme des Getränkes. Eine Zwischenwand, insbesondere ein Verdampfermantel 3, trennt den Verdampferraum 4 vom Adsorberraum 5. Dieser Adsorberraum 5 ist wiederum durch ein Lochblech 6 unterteilt, wobei die äussere Kammer zwischen dem Lochblech 6 und dem Aussenmantel 8 mit einem Zeolithgranulat 7 gefüllt ist. Die Aussenseite dieses Getränkefasses wird in konventioneller Art und Weise von einem Aussenmantel 8, einem Oberboden 9 und einem Unterboden 10 gebildet. Die Blase 2 ist mit einem Verdampfer 11 versehen, der an der Aussenseite der Blase 2 angeordnet ist und mit Hilfe von Spannfedern 12 in einen gut wärmeleitenden Kontakt mit der Blase 2 gebracht wird. Der Verdampferraum 4 kann über eine Ventilanordnung 21 mit dem Adsorberraum 5 in Verbindung gebracht werden. Diese Ventilanordnung 21 umfasst ein am Verdampfermantel 3 befestigtes Federelement 14, an welchem ein elastisches Dichtungselement 24 befestigt ist. Ein mit Hilfe eines Öffnerhebels 16 betätigbarer Kniehebel 17 hintergreift das Federelement 14. Mit diesem Kniehebel 17 kann das Federelement 14 entgegen seiner Federkraft ausgelenkt werden und damit das Dichtungselement 24 von einer Durchlassöffnung 18 im Verdampfermantel 3 abgehoben werden.

Aus Fig. 1 ist ersichtlich, dass bei einer Deformation des Verdampfermantels 3 das Dichtungselement 24 aus der dichtenden Stellung abkippen kann oder gegen die Durchlassöffnung 18 versetzt werden kann. In beiden Fällen entsteht eine Leckage. Darüber hinaus können Kleinstpartikel des Zeolithgranulats 7 zwischen das Dichtungselement 24 und den Verdampfermantel 3 gelangen und damit die Dichtungswirkung beeinträchtigen.

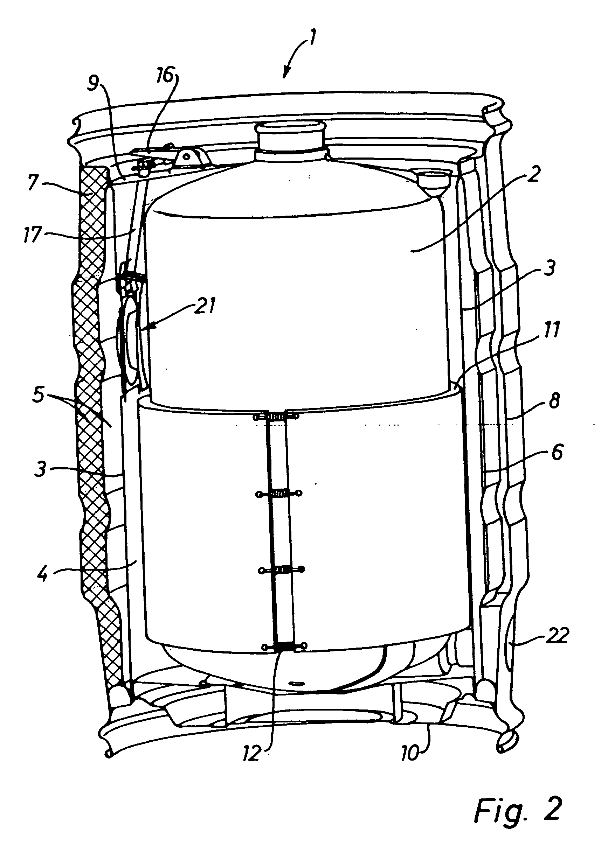

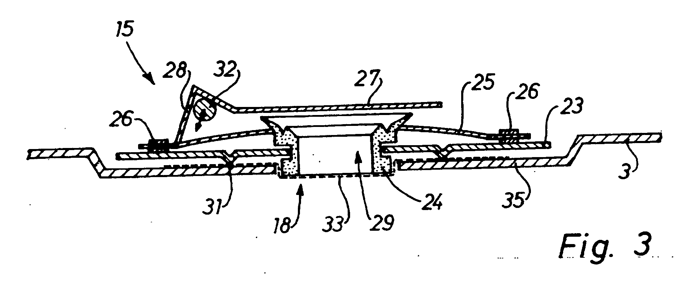

Figur 2 zeigt ein selbstkühlendes Getränkefass mit einer erfindungsgemässen Ventilanordnung. Der Aufbau dieses selbstkühlenden Fasses und die Funktionsweise desselben entsprechen im wesentlichen demjenigen des Standes der Technik, wie er in Figur 1 beschrieben worden ist. Um das in der Blase 2 sich befindende Getränk vor dem Anzapfen kühlen zu können, betätigt der Benutzer einen Öffnerhebel 16 und öffnet damit die in Figur 3 näher beschriebene Ventilanordnung 21. Durch das Öffnen dieser Ventilanordnung 21 strömt Wasserdampf aus dem Verdampferraum 4 in den Adsorberraum 5, welcher vorgängig, d.h. in der Abfüllerei, vakuumiert wurde. Der überströmende Wasserdampf wird von einem im Adsorberraum deponierten Zeolithgranulat aufgenommen. Der im Verdampferraum 4 vorliegende Wasserdampf wird von einem Verdampfer 11 erzeugt, der mit Hilfe einer Manschette und Spannfedern 12 an den unteren Teil der Blase 2 angepresst wird. Dieser Verdampfer ist mit einer vorgegebenen Menge Wasser gesättigt und entzieht dem zu kühlenden Getränk die für die Verdampfung benötigte Wärme. Damit kann das Getränk in der Blase mindestens im unteren Bereich des Fasses, d.h. im Bereich der Zapfhahnöffnung 22, abgekühlt werden.

In Figur 3 wird eine vorteilhafte Ausbildung der erfindungsgemässen Ventilanordnung schematisch dargestellt. Diese Ventilanordnung zeichnet sich im wesentlichen dadurch aus, dass diese auf einer Ventilträgerplatte 23 montiert ist. Diese Ventilträgerplatte trägt ein Dichtungselement 24, insbesondere einen Gummirespektive Silikondichtungsring, welches derart dimensioniert ist, dass sich dieser in die Durchlassöffnung 18 einfügen lässt. Auf der Ventilträgerplatte 23 ist ein Ventilverschlussträger 25 verankert. Diese Verankerung wird mit Hilfe von Verankerungselementen 26 bewerkstelligt. An diesem Ventilverschlussträger 25 ist eine Ventilverschlussklappe 27 angebracht, welche über eine Ventilverschlussfeder 28 mit dem Ventilverschlussträger 25 verbunden ist. Diese Ventilverschlussfeder 28 ist derart ausgebildet, dass die Ventilverschlussklappe 27 im Schliesszustand auf das Dichtungselement 24 drückt und damit die Dichtungsringöffnung 29 schliesst. Diese gesamte Ventilverschlussanordnung ist am Verdampfermantel 3 druckdicht befestigt, insbesondere mit Hilfe einer Ringverschweissung 31. Die Ventilverschlussklappe 27 kann in konventioneller Weise mit Hilfe eines von aussen betätigbaren Kniehebels 32 geöffnet werden. Dieser Kniehebel 32 wirkt der Schliesskraft der Ventilverschlussfeder 28 entgegen. Beim Betätigen des Kniehebels 32 hebt sich die Ventilverschlussklappe 27 vom Dichtungselement 24, wie in Figur 3 dargestellt. Es versteht sich, dass das Dichtungselement 24 auch zweiteilig ausgebildet sein kann, wobei ein Teilring mit der Ventilträgerplatte 23 dichtend verbunden ist und ein zweiter Teilring (nicht dargestellt) mit der Ventilverschlussklappe 27 verbunden ist, derart, dass im geöffneten Zustand die beiden Dichtungsteilringe voneinander beabstandet sind respektive im Schliesszustand dichtend aufeinander liegen.

In einer bevorzugten Weiterbildung der erfindungsgemässen Ventilverschlussanordnung ist ein metallisches Siebgewebe 33 vorgesehen, welches derart angeordnet ist, dass Kleinstteile des Adsorbermaterials nicht an die Dichtungsflächen des Dichtungsrings 24 gelangen können. Dieses Siebgewebe 33 ist deshalb adsorberraumseitig an der Ventilverschlussanordnung befestigt. Insbesondere kann dieses Siebgewebe 33 mit Hilfe der Ringverschweissung an der Ventilverschlussanordnung befestigt werden.

Es versteht sich, dass der Fachmann zur Montage dieser Ventilverschlussanordnung mindestens im Bereich der Durchlassöffnung 18 einen ebenen Bereich 35 in den Verdampfermantel 3 einformt, um die Ventilträgerplatte 23 in einfacher Weise daran anschweissen oder ankleben zu können.

In einer besonderen Ausführungsform sind der Ventilverschlussträger 25, die Ventilverschlussfeder 28 und die Ventilverschlussklappe 27 aus einem Stück geformt, und können insbesondere aus einem Metallblech herausgeschnitten oder gestanzt sein oder können aus einem anderen geeigneten Material gefertigt sein.

Die Vorteile der erfindungsgemässen Ventilverschlussanordnung sind dem Fachmann unmittelbar ersichtlich und insbesondere darin zu sehen, dass diese Ventilverschlussanordnung, unabhängig von allfälligen Deformationen am Verdampfermantel 3, sicher schliesst. Darüber hinaus lässt sich die erfindungsgemässe Ventilverschlussanordnung in einfacher Weise und trotzdem präzise an der Durchlassöffnung 18 positionieren und drucksicher befestigen.

## Patentansprüche

1. Selbsthühlendes Getränhefass (1), insbesondere ein Bierfass, mit einer Ventilanordnung (21), welche Ventilanordnung eine Ventilverschlussanordnung (15) umfasst, welche Ventilverschlussanordnung (15) mit einer Durchlassöffnung (18) einer Zwischenwand (3) zusammenwirkt, welche Ventilverschlussanordnung (15) zwei getrennte Kammern (4, 5) im Innern des Getränhefasses (1) verbindet und über einen Hebelmechanismus (16, 17) von Aussen betätigbar ist, welche Ventilverschlussanordnung (15) eine Ventilverschlussfeder (28) und ein elastisches Dichtungselement (24) aufweist, **dadurch gekennzeichnet, dass** die Ventilverschlussanordnung (15) eine mit dem Dichtungselement (24) druckdicht verbundene Ventilträgerplatte (23) umfasst, welche Ventilverschlussfeder (28) mit der Ventilträgerplatte (23) verankert ist und mit einer Ventilverschlussklappe (27) fest verbunden ist, welche Ventilträgerplatte (23) mit der Zwischenwand (3) druckdicht verbunden ist.

2. Getränhefass nach Anspruch 1, **dadurch gekennzeichnet, dass** die Ventilverschlussanordnung (15) einen Ventilverschlussträger (25) aufweist, welcher an der Ventilträgerplatte (23) befestigt ist.

3. Getränhefass nach Anspruch 1 oder 2, **dadurch gekennzeichnet, dass** die Zwischenwand (3) im Bereich der Durchlassöffnung (18) mindestens partiell eine ebene Fläche aufweist.

4. Getränhefass nach einem der Ansprüche 1 bis 3, **dadurch gekennzeichnet, dass** die Ventilträgerplatte (23) mit der Zwischenwand (3) verschweisst ist.

5. Getränhefass nach einem der Ansprüche 1 bis 4, **dadurch gekennzeichnet, dass** das Dichtungselement (24) adsorberraumseitig von einem Siebgewebe (33) überspannt ist.

6. Ventilverschlussanordnung für ein Selbsthühlendes Getränhefass (1), insbesondere ein Bierfass, welche Ventilverschlussanordnung (15) eine Ventilverschlussfeder (28) und ein elastisches Dichtungselement (24) aufweist, **dadurch gekennzeichnet, dass** diese Ventilverschlussanordnung (15) eine mit dem Dichtungselement (24) druckdicht verbundene Ventilträgerplatte (23) und einen Hebelmechanismus (16,17) zum Betätigen der Ventilverschlussanordnung (15) umfasst, wobei der Ventilverschlussfeder (28) an der Ventilträgerplatte (23) befestigt ist, und mit einer Ventilverschlussklappe (27) fest verbunden ist.

7. Ventilverschlussanordnung nach Anspruch 6, **dadurch gekennzeichnet, dass** diese einen Ventilverschlussträger (25) aufweist, welcher an der Ventilträgerplatte (23) befestigt ist.

8. Ventilverschlussanordnung nach Anspruch 6 oder 7, **dadurch gekennzeichnet, dass** das Dichtungselement (24) adsorberraumseitig von einem Siebgewebe (33) überspannt ist.

9. Ventilverschlussanordnung nach einem der Ansprüche 6 bis 8, **dadurch gekennzeichnet dass** das Dichtungselement (24) zweiteilig ist, wobei ein erster Teilring druckdicht mit der Ventilträgerplatte (23) verbunden ist und ein zweiter Teilring druckdicht mit der Ventilverschlussklappe (27) verbunden ist.

10. Ventilverschlussanordnung nach einem der Ansprüche 6 bis 9, **dadurch gekennzeichnet, dass** der Ventilverschlussträger (25), die Ventilverschlussfeder (28) und Ventilverschlussklappe (27) aus einem Stück geformt sind.

## Claims

1. Self-cooling beverage keg (1), in particular a beer keg, with a valve arrangement (21), said valve arrangement comprising a valve closure arrangement (15), said valve closure arrangement (15) cooperating with an outlet opening (18) of a partition wall (3), said valve closure arrangement (15) connecting two separate chambers (4, 5) within the beverage keg (1) and being activatable from outside by means of a lever mechanism (16, 17), said valve closure arrangement (15) comprising a valve closure spring (28) and an elastic sealing element (24), wherein the valve closure arrangement (15) comprises a valve support plate (23) which is pressure-tightly connected to the sealing element (24), said valve closure spring (28) being coupled to the valve support plate (23) and being tightly connected with a valve closure flap (27), said valve support plate (23) being pressure-tightly connected with the partition wall (3).

2. Beverage keg according to claim 1, wherein the valve closure arrangement (15) comprises a valve closure support (25) which is attached to the valve support plate (23).

3. Beverage keg according to one of claims 1 or 2, wherein in the region of the outlet opening (18) the partition wall (3) at least partially comprises a plane surface.

4. Beverage keg according to one of claims 1 to 3, wherein the valve support plate (23) is welded to the partition wall (3).

5. Beverage keg according to one of claims 1 to 4, wherein the sealing element (24), on its side facing the adsorber area, is spanned with a sieve fabric (33).

6. Valve closure arrangement for a self-cooling beverage keg (1), in particular a beer keg, said valve closure arrangement (15) comprising a valve closure spring (28) and an elastic sealing element (24), wherein said valve closure arrangement (15) comprises a valve support plate (23) which is pressure-tightly connected to the sealing element (24) and further comprises a lever mechanism (16, 17) for activating the valve closure arrangement (15), wherein the valve closure spring (28) is coupled to the valve support plate (23) and is tightly connected to a valve closure flap (27).

7. Valve closure arrangement according to claim 6, wherein said valve closure arrangement comprises a valve closure support (25) which is coupled to the valve support plate (23).

8. Valve closure arrangement according to one of claims 6 or 7, wherein the sealing element (24), on its side facing the adsorber area, is spanned with a sieve fabric (33).

9. Valve closure arrangement according to one of claims 6 to 8, wherein the sealing element (24) is in two parts, whereby a first annular part is pressure-tightly joined to the valve support plate (23) and a second annular part is pressure-tightly joined to the valve closure flap (27).

10. Valve closure arrangement according to one of claims 6 to 9, wherein the valve closure support (25), the valve closure spring (28) and the valve closure flap (27) are made of one part.

## Revendications

1. Récipient à boisson auto-refroidissant (1), en particulier un tonneau à bière, comprenant un arrangement de soupape (21), lequel arrangement de soupape comporte un arrangement de fermeture de soupape (15), lequel arrangement de fermeture de soupape (15) coopère avec une ouverture de passage (18) d'une paroi intermédiaire (3), lequel arrangement de fermeture de soupape (15) relie deux chambres séparées (4, 5) à l'intérieur du récipient à boisson (1) et peut être actionné de l'extérieur par l'intermédiaire d'un mécanisme à levier (16, 17), lequel arrangement de fermeture de soupape (15) présente un ressort de fermeture de soupape (28) et un élément d'étanchéité élastique (24), **caractérisé en ce que** l'arrangement de fermeture de soupape (15) présente une plaque de support de soupape (23) reliée de manière à être étanche à la pression à l'élément d'étanchéité (24), lequel ressort de fermeture de soupape (28) est ancré avec la plaque de support de soupape (23) et est relié de manière fixe à un clapet de fermeture de soupape (27), laquelle plaque de support de soupape (23) est reliée de manière à être étanche à la pression, à la paroi intermédiaire (3).

2. Récipient à boisson selon la revendication 1, **caractérisé en ce que** l'arrangement de fermeture de soupape (15) présente un support de fermeture de soupape (25), lequel est fixé à la plaque de support de soupape (23).

3. Récipient à boisson selon la revendication 1 ou 2, **caractérisé en ce que** la paroi intermédiaire (3) présente, dans la zone de l'ouverture de passage (18), une surface plane au moins en partie.

4. Récipient à boisson selon l'une quelconque des revendications 1 à 3, **caractérisé en ce que** la plaque de support de soupape (23) est soudée à la paroi intermédiaire (3).

5. Récipient à boisson selon l'une quelconque des revendications 1 à 4, **caractérisé en ce que** l'élément d'étanchéité (24) est recouvert d'un tissu métallique à tamis (33) côté espace absorbant.

6. Arrangement de fermeture de soupape pour un récipient à boisson auto-refroidissant (1), en particulier un tonneau à bière, lequel arrangement de fermeture de soupape (15) présente un ressort de fermeture de soupape (28) et un élément d'étanchéité élastique (24), **caractérisé en ce que** cet arrangement de fermeture de soupape (15) comporte une plaque de support de soupape (23) reliée, en étanchéité à la pression, à l'élément d'étanchéité (24), et un mécanisme à levier (16, 17) pour actionner l'arrangement de fermeture de soupape (15), le ressort de fermeture de soupape (28) étant fixé à la plaque de support de soupape (23) et étant relié de manière fixe à un clapet de fermeture de soupape (27).

7. Arrangement de fermeture de soupape selon la revendication 6, **caractérisé en ce que** celui-ci présente un support de fermeture de soupape (25), lequel est fixé à la plaque de support de soupape (23).

8. Arrangement de fermeture de soupape selon la revendication 6 ou 7, **caractérisé en ce que** l'élément d'étanchéité (24) est recouvert d'un tissu métallique à tamis (33) côté espace absorbant.

9. Arrangement de fermeture de soupape selon l'une quelconque des revendications 6 à 8, **caractérisé en ce que** l'élément d'étanchéité (24) est en deux parties, un premier anneau partiel étant relié, en étanchéité à la pression, à la plaque de support de soupape (23), et un second anneau partiel étant relié, en étanchéité à la pression, au clapet de fermeture de soupape (27).

10. Arrangement de fermeture de soupape selon l'une quelconque des revendications 6 à 9, **caractérisé en ce que** le support de fermeture de soupape (25), le ressort de fermeture de soupape (28) et le clapet de fermeture de soupape (27) sont formés à partir d'une seule pièce.
